Europäisches Patentamt

European Patent Office

Office européen des brevets

(11) Publication number: **0 483 363 A1**

# EUROPEAN PATENT APPLICATION
## published in accordance with Art. 158(3) EPC

(21) Application number: 91908457.4

(22) Date of filing: 17.04.91

(86) International application number: **PCT/JP91/00504**

(87) International publication number: **WO 91/16708 (31.10.91 91/25)**

(51) Int. Cl.5: **G11B 11/10**

(30) Priority: **17.04.90 JP 100699/90**
**17.04.90 JP 100700/90**
**17.04.90 JP 100701/90**
**17.04.90 JP 100702/90**

(43) Date of publication of application:
**06.05.92 Bulletin 92/19**

(84) Designated Contracting States:
**AT BE CH DE DK ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **MIYAMOTO, Kazuyuki Mitsui Petrochemical Industries, Ltd. 580-32, Aza-Taku 2-gou Nagaura Sodegaura-shi Chiba 299-02(JP)**

(74) Representative: **Myerscough, Philip Boyd et al J.A.Kemp & Co. 14, South Square Gray's Inn London, WC1R 5EU(GB)**

(54) **PRODUCTION METHOD OF MAGNETOOPTICAL RECORDING MEDIUM AND MAGNETOOPTICAL RECORDING MEDIUM.**

(57) A substrate is provided with at least a magnetooptical recording layer and a protective layer to form a magnetooptical recording medium. The surface of the protective layer is coarsened in a peripheral direction. This recording medium gives good floating conditions to a magnetic head to write data.

*FIG. 2*

Rank Xerox (UK) Business Services
(-/2.18/2.1)

## TECHNICAL FIELD

This invention relates to a magnetooptical recording medium capable of overwriting and process for the preparation thereof, and more particularly to a magnetooptical recording medium capable of overwriting by the magnetic field modulation method.

## TECHNICAL BACKGROUND

It is known that magnetooptical recording layers composed of alloys consisting of transition metals, such as iron and cobalt, and rare earth elements, such as terbium (Tb) and gadolinium (Gd), have an easy magnetization axis perpendicular to the film surface and are capable of forming in a uniformly magnetized film a small inverse magnetic domain with a magnetization anti-parallel to the magnetization of the film. By corresponding the existence or nonexistence of this inverse magnetic domain to "1" or "0", it becomes possible to store a digital signal in such magnetooptical recording film as mentioned above.

Usually, information is stored in the magnetooptical recording medium having the above-mentioned magnetooptical recording film by illuminating the recording layer through the substrate of the medium by a converged laser beam, heating the recording layer microscopically, and impressioning an external magnetic field to form magnetic domains (pits). The magnetic field modulation method is known as one of the methods to overwrite the information already stored in the magnetooptical recording film, wherein the pits which are to be overwritten are illuminated by a converged laser beam up to microscopically heat up to a Curie temperature or a magnetic compensation temperature, the illumination of said converged laser beam is stopped to lower the temperature, and an external magnetic field corresponding to the information to be stored externally is impressioned to said pits.

In order to store information in a magnetooptical recording medium according to this magnetic field modulation method, a magnetic head having a small electromagnet is used. The magnetic head used herein is known to include a fixed type magnetic head or a floating type magnetic head. When the fixed type magnetic head is used, a large magnetic field is necessary therefor, whereas when the floating type magnetic head is used, a small magnetic field used therefor can cope with the storing of information and makes it possible to store the information at high speed, because a small distance can be kept between said fixed type magnetic head and the magnetooptical recording medium.

The floating type magnetic head comes to float by a wind pressure generated when a magnetooptical recording medium is allowed to rotate. However, this magnetic head is in contact with the magnetooptical recording medium when said recording medium is at a standstill. On that account, this magnetic head comes to rub the surface of the magnetooptical recording medium at the time of the start of the rotation of said recording medium and at the time of stopping the rotation of said recording medium, whereby the surface of said recording medium is sometimes damaged or the magnetic head is sometimes destroyed.

In light of the foregoing, the magnetooptical recording medium capable of overwriting according to the magnetic field modulation method is composed basically of a substrate having thereon a magnetooptical recording film and a protective layer, and if necessary the recording medium may have a dielectric layer between the substrate and the magnetooptical film, a dielectric layer (enhancement layer) or a metallic layer between the magnetooptical film and the protective layer, or a lubricating layer on the protective layer.

As the protective layer mentioned above, there have heretofore been used, for example, ultraviolet-curing resins and the like. According to the study carried out by the present inventors, however, it has been found that when the protective layer composed of the ultraviolet-curing resin is used in the above-mentioned recording medium, the magnetic head is difficult to float above said recording medium and it is not possible to keep said magnetic head floating steadily.

The present invention has been made in view of the prior art as mentioned above, and an object of the invention is to provide a magnetooptical recording medium capable of storing information using the floating type magnetic head, and process for the preparation thereof.

## DISCLOSURE OF THE INVENTION

The magnetooptical recording medium of the present invention comprising a substrate and thereon at least a magnetooptical recording layer and a protective layer is characterized in that the surface of the protective layer is roughened in the circumferential direction of the substrate.

In the present magnetooptical recording medium as mentioned above, it is preferable that grooves are formed on the surface of the protective layer in the circumferential direction at an average interval between the grooves of not more than 20 $\mu$m, and an average surface roughness of said protective layer in the radius direction is 0.003-0.01 $\mu$m.

The process for the preparation of the present magnetooptical recording medium is characterized in that the surface of the protective layer formed on the magnetooptical recording medium comprising the substrate and thereon at least the magnetooptical recording layer and the protective layer is roughened mechanically in the circumferential direction of the substrate.

BRIEF DESCRIPTION OF THE DRAWINGS

Fig. 1 is a rough sectional view of the magnetooptical recording medium of the present invention.

Fig. 2 is a rough sectional view of the protective layer of the magnetooptical recording medium of the present invention.

Fig. 3 is a rough sectional view of the protective layer of another magnetooptical recording medium having disk (disc) shape of the present invention.

1     Magnetooptical recording medium
2     Substrate
3     First protective enhancing layer
4     Magnetooptical recording layer
5     Second protective enhancing layer
6     metallic layer
7     Protective layer
8     Groove
9     Nonmagnetic particles

BEST MODE FOR PRACTICING THE INVENTION

The magnetooptical recording media of the present invention and the process for the preparation thereof are illustrated below in detail.

In the present invention, basically a magnetooptical recording medium 1 comprises a substrate 2 and thereon at least a magnetooptical recording layer 4 and a protective layer 7.

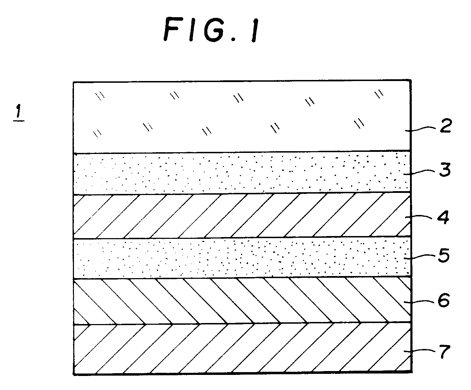

If necessary, as shown in Fig. 1, the magnetooptical recording medium 1 may be provided with a protective enhancing layer 3 between the substrate 2 and the magnetooptical recording layer 4, and further with a second protective enhancing layer 5 and a metallic layer 6 between the magnetooptical recording layer 4 and the protective layer 7.

The protective layer 7 used in the invention may be formed such resins, for example, as ultraviolet-curing resins, thermosetting resins and electron beam-curing resins, concretely ultraviolet-curing acrylic resins.

The protective layer (proctective film) 7 as mentioned above may be formed, for example, by such a coating technique as spin coating, roll coating or spray coating.

In the present invention, the surface of the protective layer 7 as described above is preferably roughened by forming grooves in the circumferential direction thereof.

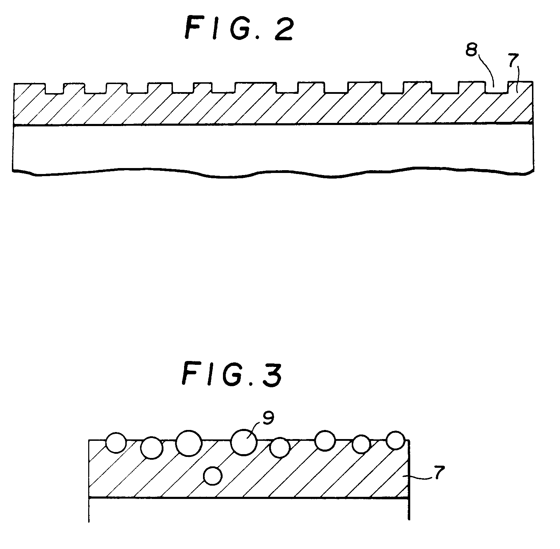

"The surface of the protective layer is roughened in the circumferential direction" signifies in the present invention that the protective layer of the magnetooptical recording medium is surface roughened by forming grooves, etc., on the protective layer along the circumferential direction of the medium. That is to say, as shown in Fig. 2, the protective layer is surface roughened in such a manner that unevenness is formed on the section in the radius direction of the protective layer when the magnetooptical recording medium is sectioned in the radius direction.

The surface of the protective layer 7 may be roughened, for example, by allowing a sandpaper having a uniform roughness or a comb-like tool to touch said surface while rotating the magnetooptical recording medium 1, thereby cutting mechanically the surface of the protective layer 7 in the circumferential direction.

The surface of the protective layer 7 of the invention is roughened, and grooves 8 are formed in the circumferential direction, as shown in Fig. 2. In the protective layer 7 formed the grooves 8, an average surface roughness in the radius direction is 0.003-0.01 $\mu$m, preferably 0.003-0.008 $\mu$m. An average interval between the grooves 8 (an average value of a distance between the center of the groove and that of the adjacent groove) is not more than 20 $\mu$m, preferably not more than 10 $\mu$m, especially preferably 0.1 to 10 $\mu$m.

The average surface roughness of the protective layer 7 in radius direction referred to in the present specification is a value as measured according to JIS B 0601-1982 (cut off value: 0.8 mm, diameter of contact finger: 25 $\mu$m). This measured value is obtained by using a contact profile meter (a step meter), wherein a contact finger is brought into contact with an article to be tested while applying a given load vertically to the contact finger, the article is moved in one direction (when the article is a disc substrate, it is moved from one point of the periphery of the disc toward the center of the disc), the surface profile of the article is put out by observing directly an up-and-down motion of the contact finger, and the values thus put out are processed by the statistical method to obtain an average roughness of the article.

Similarly, the average interval between the grooves is an average distance between the center of a groove and that of the adjacent groove, and the distance is observed microscopically and measured.

In the magnetooptical recording medium 1 to be prepared in the present invention, the substrate 2, the magnetooptical recording layer 4 and, if necessary, the first protective enhancing layer 3 and the second protective enhancing layer 5 used may be those used widely in the prior art magnetooptical recording media, for example, those as will be illustrated below.

Preferably, the substrate 2 is made of a transparent material. Besides inorganic materials used for the substrate, such as glass, aluminum, etc., there may be used such organic materials, for example, as acrylate resins such as polymethyl methacrylate, polycarbonate, polymer alloy of polycarbonate and polystyrene, ethylene/cycloolefin copolymers as disclosed in U.S. Patent 4,614,778, for example, a copolymer of ethylene and 1,4,5,8-dimethano-1,2,3,4,4a,5,8,8a-octahydronaphthalene (tetracyclododecene), a copolymer of ethylene and 2-methyl-1,4,5,8-dimethano-1,2,3,4,4a,5,8,8a-octahydronaphthalene (methyltetracyclododecene), a copolymer of ethylene and 2-ethyl-1,4,5,8-dimethano-1,2,3,4,4a,5,8,8a-octahydronaphthalene, poly-4-methyl-1-pentene, epoxy resin, polyether sulfone, polysulfone, polyether imide, a ring-opening homopolymer of tetracyclododecene as disclosed in the Japanese Patent Laid-open Publication No. 60-26024, a ring-opening copolymer of tetracyclododecene and norbornene, and a hydrogenated homopolymer or copolymer thereof, etc., particularly preferred are such ethylene/cycloolefin copolymers as disclosed in the above-mentioned U.S. Patent 4,614,778.

The thickness of the substrate 2 as illustrated above, though not particularly limited, is preferably 0.5-5 mm, especially 1-2 mm.

The enhancing layer is formed from a layer having its composition, for example, $SiN_x$, ZnSe, AlN, ZnS, Si or CdS. From the standpoint of physical properties such as crack resistance, the enhancing layer is formed preferably from a layer having the composition of $SiN_x$. The $SiN_x$ layer may include, for example, a silicon nitride layer or a layer containing silicon nitride.

In the protective (enhancing) layer having the composition represented by $SiN_x$, x is preferably $0 < x \leq 4/3$. Concretely, particularly useful as the protective enhancing layer is a silicon nitride layer comprising $Si_3N_4$ (trisilicon tetranitride) or a mixed layer prepared by mixing $Si_3N_4$ with Si so that x becomes $0 < x < 4/3$.

The film thickness of the enhancing layer is preferably 500-2000 Å, especially 800-1500 Å.

By the use of the enhancing layer having its thickness as defined above, it is possible to obtain a magnetooptical recording medium having favorable C/N ratio and broad recording power margin.

Useful as the magnetooptical recording layer 4, for example, is an alloy layer containing (i) at least one member selected from among 3d transition metals and (iii) at least one member selected from among rare earth elements (e.g. TbFeCo alloy layer) or an alloy layer containing (i) at least one member selected from among 3d transition metals, (ii) a corrosion resistance metal and (iii) at least one member selected from among rare earth elements.

As the 3d transition metal (i), there may be used Fe, Co, Ti, V, Cr, Mn, Ni, Cu or Zn, but preferred is the use of Fe or Co or both of them.

This 3d transition metal is preferably present in the magnetooptical recording layer 4 in an amount of 20-90 atom%, preferably 30-85 atom% and especially 35-80 atom%.

The corrosion resistant metal (ii) contained in the magnetooptical recording layer is capable of improving this magnetooptical recording layer in oxidation resistance. The corrosion resistant metal used herein includes Pt, Pd, Ti, Zr, Ta and Nb. Of these metals, preferred are Pt, Pd and Ti, particularly Pt or Pd or both of them.

This corrosion resistant metal (ii) is preferably present in the magnetooptical recording layer 4 in an amount of up to 30 atom%, preferably 5-30 atom%, and especially 10-25 atom% and particularly 10-20 atom%.

As the rare earth element (iii), there may be used, for example, Gd, Tb, Dy, Ho, Er, Tm, Yb, Lu, La, Ce, Pr, Nd, Pm, Sm or Eu. Of these elements exemplified above, preferred is Gd, Tb, Dy, Ho, Nd, Sm or Pr.

At least one rare earth element selected from among those mentioned above is present in the magnetooptical recording layer 4 in an amount of 5-50 atom%, preferably 8-45 atom% and especially 10-40 atom%.

In the present invention, the magnetooptical recording layer 4 used preferably has the composition as will be mentioned hereinbelow.

The magnetooptical recording layer used in the invention preferably contains Fe or Co or both of them as the 3d transition metal (i), said Fe and/or Co being present therein in an amount of more than 40 atom% but not more than 80 atom%, preferably more than 40 atom% but less than 75 atom% and especially more than 40 atom% but not more than 59 atom%, and also said Fe and/or Co being present therein in such an amount that the Co/(Fe + Co) ratio (atomic ratio) becomes more than 0 but not more than 0.3, preferably more than 0 but not more than 0.2 and especially more than 0.01 but not more than 0.2.

In the magnetooptical recording layer, there may be contained preferably Pt or Pd or both of them as the corrosion resistant metal (ii) in an amount of 5-30 atom%, preferably exceeding 10 atom% but not more than 30 atom%, especially exceeding 10 atom% but less than 20 atom% and most preferably more than 11 atom% but not more than 19 atom%.

This magnetooptical recording layer contains at least one member selected from among Nd, Sm, Pr, Ce, Eu, Gd, Tb, Dy and Ho as the rare earth element (RE)(iii).

Of the rare earth elements illustrated above, preferably usable are Nd, Pr, Gd, Tb and Dy, and particularly preferred is Tb. These rare earth elements may be used in combination of two or more, and in this case the combination preferably contains at least 50 atom% of Tb.

From the standpoint of obtaining an optical magnetism having an easy axis of magnetization perpendicular to the film surface, it is preferable that this rare earth element is present in the magnetooptical recording layer in such an amount that when the Re/(RE + Fe + Co) ratio (atomic ratio) is represented by x, x is $0.15 \leq x \leq 0.45$, preferably $0.20 \leq x \leq 0.4$.

It is also possible to improve a Curie temperature, a compensation temperature, a coercive force Hc, or a Kerr-rotation angle $\theta\mathbf{k}$, or to reduce the cost of production by incorporating small amounts of various elements in addition to the elements mentioned above in the magnetooptical recording layer.

The magnetooptical recording layer 4 of the composition mentioned above has an axis of easy axis of magnetization perpendicular to the film surface and, in most cases, becomes a film capable of perpendicular magnetic recording and magnetooptical recording and having Kerr hysteresis loop exhibiting favorable square shape, preferably an amorphous alloy thin film. It may be confirmed by wide angle X-ray diffraction or the like that it is the amorphous or not.

The film thickness of this magnetooptical recording layer 4 is 50-5000 Å, preferably 100-2000 Å, especially 100-400 Å and most preferably 150-300 Å.

The metallic layer 6 is formed, for example, from metal such as aluminum, chromium, copper, nickel, gold, silver or alloys thereof.

It is considered that the metallic layer formed from nickel or nickel-chromium alloy functions mainly as reflecting layer, and that formed from aluminum alloy functions mainly as good heat conductor. From the standpoint of minimizing dependency on linear velocity of recording power of the magnetooptical recording medium, it is preferable to use the metallic layer formed from such an aluminum alloy as will be mentioned below.

Concrete examples of the aluminum alloy referred to above include those enumerated hereinbelow.

Al-Cr alloy (Cr content: 0.1-10 atom%),
Al-Cu alloy (Cu content: 0.1-10 atom%),
Al-Mn alloy (Mn content: 0.1-10 atom%),
Al-Hf alloy (Hf content: 0.1-10 atom%),
Al-Nb alloy (Nb content: 0.1-10 atom%),
Al-B alloy (B content: 0.1-10 atom%),
Al-Ti alloy (Ti content: 0.1-10 atom%),
Al-Ti-Nb alloy (Ti content: 0.5-5 atom%, Nb content: 0.5-5 atom%),
Al-Ti-Hf alloy (Ti content: 0.5-5 atom%, Hf content: 0.5-5 atom%),
Al-Cr-Hf alloy (Cr content: 0.1-5 atom%, Hf content: 0.1-9.5 atom%),
Al-Cr-Hf-Ti alloy (Cr content: 0.1-5 atom%, Hf content: 0.1-9.5 atom%, Ti content: 0.1-9.5 atom%),
Al-Cr-Ti alloy (Cr content: 0.1-5 atom%, Ti content: 0.1-9.5 atom%),
Al-Cr-Zr alloy (Cr content: 0.1-5 atom%, Zr content: 0.1-10 atom%),
Al-Ti-Nb alloy (Ti content: 0.5-5 atom%, Nb content: 0.5-5 atom%),
Al-Ni alloy (Ni content: 0.1-10 atom%),
Al-Mg alloy (Mg content: 0.1-10 atom%),
Al-Mg-Ti alloy (Mg content: 0.1-10 atom%, Ti content: 0.1-10 atom%),
Al-Ti-Cr alloy (Mg content: 0.1-10 atom%, Ti content: 0.1-10 atom%, Cr content: not more than 10 atom%),
Al-Mg-Cr alloy (Mg content: 0.1-10 atom%, Cr content: 0.1-10 atom%),
Al-Mg-Hf alloy (Mg content: 0.1-10 atom%, Hf content: 0.1-10 atom%),
Al-Mg-Hf-Ti alloy (Mg content: 0.1-10 atom%, Hf content: 0.1-10 atom%, Ti content: 0.1-10 atom%),
Al-Se alloy (Se content: 0.1-10 atom%)
Al-Mg-Hf-Ti-Cr alloy (Mg content: 0.1-10 atom%, Hf content: 0.1-10 atom%, Ti content: 0.1-10 atom%, Cr content: not more than 10 atom%),
Al-Zr alloy (Zr content: 0.1-10 atom%),
Al-Ta alloy (Ta content: 0.1-10 atom%),
Al-Ta-Hf alloy (Ta content: 0.1-10 atom%, Hf content: 0.1-10 atom%),
Al-Si alloy (Si content: 0.1-10 atom%),
Al-Ag alloy (Ag content: 0.1-10 atom%),
Al-Pd alloy (Pd content: 0.1-10 atom%),
Al-Pt alloy (Pt content: 0.1-10 atom%).

The metallic layer as mentioned above desirably has a film thickness of 100-5000 Å, preferably 500-3000 Å and especially about 700-2000 Å.

The above-mentioned protective enhancing layer, magnetooptical recording layer and metallic layer may be formed on the substrate by the known method such as sputtering, electron beam deposition, vacuum deposition or ion plating.

In the present invention, the protective film (proctective layer) 7 may be a carbon-sputtered film. When the protective film (proctective layer) 7 used is a carbon-sputtered film, the magnetic head becomes easily floatable even when the surface of the protective film (protective layer) 7 is not roughened in the circumferential direction, with the result that destruction of the protective layer or damage of the magnetic head can be prevented. The film thickness of the carbon-sputtered film used as the protective layer 7 is 0.001-0.2 $\mu$m, preferably 0.02-0.1 $\mu$m.

The carbon-sputtered film as the protective layer (protective layer) 7 may be formed by the sputtering method using graphite as a target. The sputtering of carbon may be carried out under the known carbon sputtering conditions widely employed heretofore. However, it is preferable to employ such conditions as mentioned below concretely.

For instance, the carbon-sputtered film may be formed by the high frequency sputtering method using carbon as a target at a film forming speed of 1-100 Å/min, while maintaining the substrate at 80-120°C and using an argon gas pressure of 1 × $10^{-3}$ ~ 20 × $10^{-3}$ Torr.

The protective layer (protective film) 7 used in the present invention may also be a layer having the surface roughened by containing therein non-magnetic particles of an average particle diameter of 0.2-5 $\mu$m. In the protective layer (protective film) 7 of the kind mentioned above, such a synthetic resin, for example, an ultraviolet-curing resin, thermosetting resin and electron beam-curing resin, and an ultraviolet-curing acrylic resin in the concrete, is usually used as a base resin.

The average particle diameter of the non-magnetic particles 9 to be contained in the above-mentioned protective layer (protective film) 7 is 0.2-5 $\mu$m, preferably 0.5-2 $\mu$m. When information is stored using a floating type magnetic head, the magnetic head becomes easily floatable if the non-magnetic particles having an average particle diameter of 0.2-5 $\mu$m are contained in the protective layer (protective film), in addition thereto, there is obtained such an effect that no destruction of the protective layer (protective film) or no damage of the magnetic head will take place.

In a case that the protective layer (protective film) is roughened by containing therein non-magnetic particles, there is obtained such the effect that when storing information by using the floating type magnetic head the magnetic head becomes easily floatable and no destruction of the protective layer or no damage of the magnetic head will take place even when the surface of the protective layer is not roughened in the circumferential direction.

Such non-magnetic particles 8 as used herein include alumina ($Al_2O_3$), silica ($SiO_2$), silica-alumina ($SiO_2$-$Al_2O_3$), $\alpha$-$Fe_2O_3$, etc.

The above-mentioned non-magnetic particles are desirably contained in the base synthetic resin in an amount of 0.1%-10% by weight, preferably 0.2%-1% by weight.

The protective layer of the kind as mentioned above may be formed from a synthetic resin composition containing the above-mentioned non-magnetic particles by such a coating method, for example, as spin coating, roll coating or spray coating.

As shown in Fig. 3, the surface of the protective layer thus formed is uneven due to the presence of the non-magnetic particles 9 contained therein. The average surface roughness of this protective layer 7 is 0.003-0.1 $\mu$m, preferably 0.005-0.5 $\mu$m. The measurement of the average surface roughness is conducted according to JIS B 0601-1982 ( cut off value 0.8 mm, diameter of contact finger : 25 $\mu$m).

## EFFECT OF THE INVENTION

In the magnetooptical recording medium of the present invention comprising a substrate and thereon at least a magnetooptical recording layer and a protective layer, the surface of said protective layer of the magnetooptical recording medium is roughened, particularly grooves having specific interval are formed in the circumferential direction and particularly the protective layer has an average surface roughness in the radius direction. Therefore, when information is stored by using a floating type magnetic head, the magnetic head becomes easily floatable, with the result that no destruction of the protective layer or damage of the magnetic head will take place.

When the protective layer used in that case is a carbon-sputtered film, the magnetic head will become easily floatable even when the surface of said protective layer is not roughened.

The present invention is illustrated below with reference to examples, but it should be construed that the invention is in no way limited to those examples.

## Example 1

Used as a substrate was a disc, 1.2 mm in thickness and 130 mm in diameter, made of an ethylene/tetradodecene copolymer and having formed on its surface a spiral groove of 0.05 $\mu$m in depth at an interval of 1.6 $\mu$m. On the grooved surface of the disc was deposited a $Si_3N_4$ film as an enhancing layer to a thickness of 0.01 $\mu$m by the sputtering method using $Si_3N_4$ as a target.

On the $Si_3N_4$ film thus formed was deposited a $Tb_{23}Fe_{75}Co_2$ to a thickness of 0.03 $\mu$m by the sputtering method using a composite target with chips of Tb arranged on Fe-Co target.

On the $Tb_{23}Fe_{75}Co_2$ film thus formed was deposited a $Si_3N_4$ film as the second protective enhancing layer to a thickness of 0.02 $\mu$m.

On the $Si_3N_4$ film thus formed was deposited an Al film to a thickness of 0.1 $\mu$m by the sputtering method using Al target.

Subsequently, on the Al film thus formed was applied an ultraviolet-curing resin (Dainippon Ink Kagaku Kogyo Ltd., SD-17) to a thickness of 5 $\mu$m by the spin coat method to form a protective layer cured by ultraviolet irradiation, thus a magnetooptical recording medium (A) was obtained.

The magnetooptical recording medium (A) thus obtained was rotated at 1800 r.p.m. and a #1000 sandpaper was applied to the surface of the protective layer of the rotating medium under a load of 10 g/cm$^2$. As the result, there was obtained a magnetooptical recording medium (B) having grooves formed on the protective layer in the circumferential direction at an average groove interval of 6 $\mu$m, and an average surface roughness in the radius direction of the surface of said protective layer of 0.005 $\mu$m. Subsequently, a simulation experiment of overwriting this magnetooptical recording medium (B) according to the magnetic field modulation method using a commercially available Winchester type floating magnetic head. As the result, the magnetic head floated stably. And the protective film (protective layer) was not damaged, and the magnetic head was not destroyed.

This floating type magnetic head is to float by itself when an air bearing layer is formed between the magnetic head and the recording medium by means of a wind pressure generated by rotation of said recording medium. That is to say, the magnetic head is in contact with the recording medium when said medium comes to a standstill and floats when the number of revolutions of the medium reaches a given level. Accordingly, the medium and magnetic head are being rubbed with each other at the time when said medium starts to rotate and comes to a standstill.

## Comparative Example 1

The same overwriting simulation experiment as in Example 1 was conducted using the magnetooptical recording medium (A) prepared in Example 1, as it was. As the result, the magnetic head was statically adsorbed on the magnetooptical recording medium and destroyed, when the medium started to rotate.

## Comparative Example 2

The magnetooptical recording medium (A) prepared in Example 1 was immersed in acetone to etch chemically the ultraviolet-cured resin. As the result, the protective layer was roughened isotropically with an average surface roughness of 0.005 $\mu$m.

Subsequently, the same overwriting simulation experiment as in Example 1 was conducted using the magnetooptical recording medium (A) thus treated, whereby the magnetic head was statically adsorbed on the magnetooptical recording medium and destroyed when the medium started to rotate.

## Comparative Example 3

Using the same sandpaper and load as used in Example 1, the magnetooptical recording medium (A) prepared in Example 1 not yet formed grooves was grooved in a random direction. As the result, there was obtained a magnetooptical recording medium (C) having grooves formed on the protective layer in the isotropic direction (random direction) at an average groove interval of 6 $\mu$m, and an average surface roughness in the isotropic direction of the surface of said protective layer of 0.005 $\mu$m.

Subsequently, the same overwriting simulation experiment as in Example 1 was conducted using the magnetooptical recording medium (C) thus obtained, whereby the magnetic head collided with projections formed on this recording medium during rotation of said medium and was eventually destroyed.

## Comparative Example 4

The magnetooptical recording medium (A) prepared in Example 1, as it was, was rotated at 1800 r.p.m. and a #1000 sandpaper was applied under a load of 50 g/cm$^2$ to the surface of said medium.

As the result, there was obtained a magnetooptical recording medium (D) having grooves formed on the protective layer in the circumferential direction at an average groove interval of 6 $\mu$m and an average surface roughness in the radius direction of the surface of said protective layer of 0.002 $\mu$m.

Subsequently, the same overwriting simulation experiment as in Example 1 was conducted using the magnetooptical recording medium (D), whereby the magnetic head collided with projections formed on this recording medium during rotation of said medium and was eventually destroyed.

Example 2

Used as a substrate was a disc, 1.2 mm in the thickness and 130 mm in diameter, made of an ethylene/tetradodecene copolymer and having formed on its surface a spiral groove of 0.05 $\mu$m in depth at an interval of 1.6 $\mu$m. On the grooved surface was deposited a $Si_3N_4$ film as an enhancing layer to a thickness of 0.1 $\mu$m by the sputtering method using $Si_3N_4$ as a target.

On the $Si_3N_4$ film thus formed was deposited a magnetooptical recording film of $Tb_{23}Fe_{75}Co_2$ to a thickness of 0.03 $\mu$m by the sputtering method using a composite target with chips of Tb arranged on Fe-Co target.

On the $Tb_{23}Fe_{75}Co_2$ film thus formed was deposited a $Si_3N_4$ film as the second protective enhancing layer to a thickness of 0.02 $\mu$m.

On the $Si_3N_4$ film thus formed was deposited an Al film to a thickness of 0.1 $\mu$m by the sputtering method using Al target.

On the Al layer was applied an ultraviolet-curing resin having dispersed therein 1% by weight of $Al_2O_3$ (alumina) having an average particle diameter of 1 $\mu$m to form a protective layer having a thickness of 10 $\mu$m by the spin coat method. The resin thus applied was cured by ultraviolet irradiation whereby a magnetooptical recording medium (E) was obtained.

Subsequently, according to the magnetic field modulation method, the overwriting simulation experiment was conducted using a commercially available Winchester type floating type magnetic head. As the result, the magnetic head floated stably.

Comparative Example 5

Example 2 was repeated to prepare the magnetooptical recording medium (E) except that the protective layer was formed from an ultraviolet-curing resin containing no $Al_2O_3$ (alumina). The same simulation experiment as in Example 2 was conducted, whereby the protective layer peeled when the medium started to rotate.

Comparative Example 6

On the Al layer of the magnetooptical recording medium (E) prepared in Example 2 was applied an ultraviolet-curing resin having dispersed therein 1% by weight of $Al_2O_3$ (alumina) having an average particle diameter of 7 $\mu$m to a thickness of 10 $\mu$m by the spin coat method. The coated resin was cured by ultraviolet irradiation to obtain a magnetooptical recording medium (F).

Subsequently, the same overwriting simulation experiment as in Example 2 was conducted using the magnetooptical recording medium (F) thus obtained, whereby the magnetic head collided with projections formed on the medium during rotation of said medium and was eventually damaged.

Comparative Example 7

On the Al layer of the magnetooptical recording medium (F) prepared in Example 2 was applied an ultraviolet-curing resin having dispersed therein $Al_2O_3$ (alumina) having an average particle diameter of 0.1 $\mu$m to a thickness of 10 $\mu$m by the spin coat method. The applied resin was cured by ultraviolet irradiation to obtain a magnetooptical recording medium (G).

Subsequently, the same overwriting simulation experiment as in Example 2 was conducted using the magnetooptical recording medium (G) thus obtained, whereby the magnetic head was adsorbed on the magnetooptical recording medium.

Example 3

Used as a substrate was a disc, 1.2 mm in thickness and 130 mm in diameter, made of an ethylene/tetradodecene copolymer and having formed on its surface a spiral groove of 0.05 $\mu$m in depth at an interval of 1.6 $\mu$m. On the grooved surface of the disc was deposited a $Si_3N_4$ film as an enhancing layer to a thickness of 0.1 $\mu$m by the sputtering method using $Si_3N_4$ as a target.

On the $Si_3N_4$ film thus formed was deposited a magnetooptical recording layer of $Tb_{23}Fe_{75}Co_2$ to a thickness of 0.03 $\mu$m by the sputtering method using a composite target with chips of Tb arranged on Fe-Co target as a target.

On the $Tb_{23}Fe_{75}Co_2$ film thus formed was deposited a $Si_3N_4$ film as the second protective enhancing layer to a thickness of 0.02 $\mu$m.

On the $Si_3N_4$ film thus formed was deposited an Al film to a thickness of 0.1 $\mu$m by the sputtering method using Al target, whereby a magnetooptical recording medium was obtained.

Subsequently, on the Al film of the magnetooptical recording medium thus obtained was formed a carbon film to a thickness of 0.02 $\mu$m by the sputtering method using a graphite target maintaining the substrate at 100°C and using an argon gas pressure of $5 \times 10^{-3}$ Torr, to obtain a magnetooptical recording medium (H).

Then, a simulation experiment of the overwriting, according to the magnetic field modulation method, of this magnetooptical recording medium (H) was conducted using a commercially available Winchester floating type magnetic head. As the result, the magnetic head floated stably.

Comparative Example 8

Using the magnetooptical recording medium prepared in Example 3, except that a carbon film was not formed, the same overwriting simulation experiment as in Example 3 was conducted, whereby the Al film peeled off when the medium started to rotate.

**Claims**

1. In a magnetooptical recording medium having a substrate and thereon at least a magnetooptical recording layer and a protective layer, the improvement which resides in that grooves are formed on the surface of the protective layer in the circumferential direction at an average interval between the grooves of not more than 20 $\mu$m and an average surface roughness in the radius direction of the protective layer is 0.003-0.01 $\mu$m.

2. The magnetootpical recording medium as claimed in claim 1 wherein the average groove interval is not more than 10 $\mu$m and the average surface roughness in the radius direction is 0.003-0.008 $\mu$m.

3. In a magnetooptical recording medium having a substrate and thereon at least a magnetooptical recording film and a protective layer, the improvement which resides in that the protective layer contains non-magnetic particles having an average particle diameter of 0.2-5 $\mu$m.

4. The magnetooptical recording medium as claimed in any of claims 1-3 wherein the protective layer is formed from an ultraviolet-curing resin, a thermosetting resin or an electron beam-curing resin.

5. In a process for the preparation of a magnetooptical recording medium having a substrate and thereon at least a magnetooptical recording layer and a protective layer, the improvement which comprises roughening mechanically the surface of the protective layer in the circumferential direction.

6. In a process for the preparation of a magnetooptical recording medium having a substrate and thereon at least a megnetooptical recording layer and a protective layer, the improvement which comprises roughening the surface of the protective layer in the circumferential direction by forming grooves at an average groove interval of 20 $\mu$m, wherein an average surface roughness in the radius direction of the protective layer is 0.003-0.01 $\mu$m.

7. In a magnetooptical recording medium having a substrate and thereon at least a megnetooptical recording layer and a protective layer, the improvement which resides in that the protective layer is a carbon-sputtered film.

# FIG. 1

*FIG. 2*

*FIG.3*

# INTERNATIONAL SEARCH REPORT

International Application No PCT/JP91/00504

## I. CLASSIFICATION OF SUBJECT MATTER (if several classification symbols apply, indicate all) [6]

According to International Patent Classification (IPC) or to both National Classification and IPC

Int. Cl$^5$   G11B11/10

## II. FIELDS SEARCHED

### Minimum Documentation Searched [7]

| Classification System | Classification Symbols |
|---|---|
| IPC | G11B11/10, G11B5/82 |

### Documentation Searched other than Minimum Documentation to the Extent that such Documents are Included in the Fields Searched [8]

| | |
|---|---|
| Jitsuyo Shinan Koho | 1955 – 1990 |
| Kokai Jitsuyo Shinan Koho | 1971 – 1990 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | JP, A, 1-194149 (NEC Home Electronics Ltd.), August 4, 1989 (04. 08. 89), (Family: none) | 1, 2, 5, 6 |
| Y | JP, U, 60-85719 (Tokico Co., Ltd.), June 13, 1985 (13. 06. 85), (Family: none) | 1, 2, 5, 6 |
| Y | JP, A, 1-107344 (Hitachi, Ltd. and another), April 25, 1989 (25. 04. 89), (Family: none) | 3 |
| Y | JP, A, 64-64118 (Hitachi, Ltd.), March 10, 1989 (10. 03. 89), (Family: none) | 3 |
| Y | JP, A, 63-69048 (Seiko Epson Corp.), March 29, 1988 (29. 03. 88), (Family: none) | 3 |
| Y | JP, A, 1-194152 (Daicel Chemical Industries, Ltd.), | 3, 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 13, 1991 (13. 06. 91) | July 1, 1991 (01. 07. 91) |

| International Searching Authority | Signature of Authorized Officer |
|---|---|
| Japanese Patent Office | |

Form PCT/ISA/210 (second sheet) (January 1985)

FURTHER INFORMATION CONTINUED FROM THE SECOND SHEET

| | | | |
|---|---|---|---|
| | August 4, 1989 (04. 08. 89), (Family: none) | | |
| Y | JP, A, 1-251446 (NEC Home Electronics Ltd.), October 6, 1989 (06. 10. 89), (Family: none) | 3, 4 | |
| Y | JP, A, 1-98116 (Nikon Corp.), April 17, 1989 (17. 04. 89), (Family: none) | 7 | |
| Y | JP, A, 62-195744 (Fuji Electric Co., Ltd.), August 28, 1987 (28. 08. 87), (Family: none) | 7 | |

V.☐ OBSERVATIONS WHERE CERTAIN CLAIMS WERE FOUND UNSEARCHABLE [1]

This international search report has not been established in respect of certain claims under Article 17(2) (a) for the following reasons:

1.☐ Claim numbers        , because they relate to subject matter not required to be searched by this Authority, namely:

2.☐ Claim numbers        , because they relate to parts of the international application that do not comply with the prescribed requirements to such an extent that no meaningful international search can be carried out, specifically:

3.☐ Claim numbers        , because they are dependent claims and are not drafted in accordance with the second and third sentences of PCT Rule 6.4(a).

VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)